# EUROPÄISCHE PATENTSCHRIFT

(11) **EP 1 721 677 B1**
(45) Veröffentlichungstag und Bekanntmachung des Hinweises auf die Patenterteilung: **02.02.2011**
(21) Anmeldenummer: 06017838.1
(22) Anmeldetag: 18.09.2001
(51) Int. Cl.: B03B 9/06, C22B 7/00, B29B 17/02

(54) **Verfahren zur Aufbereitung von Shredder-Rückständen zur Erzeugung einer Sand-Fraktion**
Method for processing of shredder residues for producing of a sand fraction
Procédé pour traiter des résidus de déchiquetage pour la production d'une fraction de sable

(30) Priorität: 27.10.2000 DE 10053492
(43) Veröffentlichungstag der Anmeldung: 15.11.2006
(62) Teilanmeldung aus: 01976232.7
(73) Patentinhaber: Volkswagen AG, 38436 Wolfsburg (DE)
(72) Erfinder: Knust, Michael, 38550 Isenbüttel (DE); den Dunnen, Bram, 38106 Braunschweig (DE); Goldmann, Daniel, Dr., 38640 Goslar (DE)

(56) Entgegenhaltungen:
- WO-A-00/53324
- DE-A- 19 755 629
- RUDOLPH K-U ET AL: "STAND DER BEHANDLUNG UND VERWERTUNG VON SHREDDERRUECKSTAENDEN AUS ALTAUTOS" MUELL UND ABFALL, SCHMIDT VERLAG, BERLIN, DE, Bd. 29, Nr. 12, 1. Dezember 1997 (1997-12-01), Seiten 745-755, XP000730441 ISSN: 0027-2957

## Beschreibung

Die Erfindung betrifft ein Verfahren zur Aufbereitung von Shredder-Rückständen metallhaltiger Abfälle, insbesondere von Fahrzeugkarossen.

Das Shreddern von Altfahrzeugen zum Materialaufschluss ist seit langem bekannt. Bei der Durchführung des Shredder-Prozesses haben sich Verfahrensführungen etabliert, bei denen das anfallende Stoffgemisch in verschiedene Fraktionen aufgeteilt wird. So wird zunächst mittels einer geeigneten Absaugvorrichtung eine so genannte Shredder-Leichtfraktion (SLF) vom anfallenden Stoffgemisch abgetrennt. Die verbleibende Fraktion wird anschließend mit einem Permanent-Magnetscheider in eine ferromagnetische Fraktion (Shredder-Schrott (SS)) und eine nicht-ferromagnetische Fraktion (Shredder-Schwerfraktion (SSF)) aufgetrennt. Ein Anteil der metallurgisch vollständig verwertbaren Shredder-Schrott-Fraktion liegt häufig bei zirka 50 bis 75 Gew.%. Die Shredder-Leichtfraktion wurde nach bisherigen Konzepten in der Regel als Abfall deponiert oder in Müllverbrennungsanlagen verbrannt. Sie ist dadurch gekennzeichnet, dass sie sowohl einen hohen Organik- als auch einen hohen Feinkornanteil enthält. Die schwere, nicht-flugfähige sowie nicht-ferromagnetische Fraktion - also die Shredder-Schwerfraktion - zeichnet sich durch einen hohen Anteil an Nichteisen-Metallen (NE-Metalle) aus. Zur Wiedergewinnung der verschiedenen NE-Metalle sind spezielle Aüfbereitungsanlagen entwickelt worden, bei denen allerdings der verbleibende Rest aus organischen und anorganischen, nicht-metallischen Komponenten in der Regel als Abfall deponiert wird. Unter Shredder-Rückständen sollen nachfolgend alle Stoffströme aus dem Shredderprozess verstanden werden, die nicht direkt am Shredder als metallurgisch direkt verwertbare Produkte abgezogen (Shredder-Schrott) werden können.

Aus der DE 44 37 852 A1 ist ein Verfahren bekannt, bei dem die Shredder-Leichtfraktion, insbesondere zwecks Entfernen von "unerwünschten Bestandteilen", insbesondere Kupfer und Glas, aufbereitet wird. Dabei werden die Shredder-Rückstände in einem Zwangsmischer homogenisiert und mit einem fein- bis feinstkörnigen, eine magnetisierbare Komponente enthaltenen Material vermischt sowie das resultierende Gemisch über einen Magnetscheider geführt. Es hat sich dabei gezeigt, dass die eine metallurgische Verwendung behindernden metallischen Bestandteile der Shredder-Leichtfraktion auf diese Weise abgetrennt werden können.

In der EP 0 863 114 A1 ist vorgesehen, einen dauerplastischen Bergbauversatzstoff zu schaffen, indem der Shredder-Leichtfraktion eine Bindemittelkomponente, ein Füllstoff und eine Salzlösung zugesetzt werden. Dadurch soll ein druckfester, dauerplastischer Körper geschaffen werden.

Aus der DE 197 42 214 C2 ist bekannt, die Shredder-Leichtfraktion weiter zu zerkleinern und einer thermischen Behandlung zu unterziehen. Während oder nach der Zerkleinerung sollen dabei metallische Bestandteile aussortiert werden und das verbleibende Stoffgemisch in einem Schmelzreaktor geschmolzen und durch Abkühlung zu einem "ungefährlichen" Feststoff umgewandelt werden.

Weiterhin offenbart die EP 0 922 749 A1 ein Verfahren zur Aufarbeitung der Shredder-Leichtfraktion, bei dem die Shredder-Leichtfraktion in einen Wirbelschichtvergäser und unter Einbringung von Kalziumkarbonat kalziniert wird.

In einem weiteren thermischen Verfahren sieht die DE 197 31 874 C1 vor, dass die Shredder-Leichtfraktion in einer weiteren Stufe erneut verpresst und dann zerkleinert, homogenisiert und im Wassergehalt reduziert wird, um in einer nachfolgenden Stufe thermisch verwertet zu werden.

In der EP 0 884 107 A2 ist vorgesehen, die Shredder-Leichtfraktion mittels Zerkleinerung, Klassierung und Sortierung in eine metallfreie Fraktion mit einer Zerkleinerungsstufe ≤ 20 mm zu überführen. Die Aufbereitung der Shredder-Leichtfraktion soll zu einer thermisch verwertbaren Fraktion führen.

Neben den aufgezeigten Verwertungsverfahren ist es bekannt, die Shredder-Leichtfraktion einer Vorbehandlung zu unterziehen, bei der ferromagnetische Restfraktionen aus Eisen, V2A-Stahl und Aluminium abgetrennt werden. Ähnliche Verfahren sind auch bei der Aufbereitung der Shredder-Schwerfraktion zum Einsatz gekommen. Darüber hinaus ist es bekannt, von dieser Fraktion Polyolefine abzutrennen.

Weiterhin befasst sich die DE 197 55 629 A1 mit der Aufbereitung einer Shredder-Leichtfraktion in verschiedene Fraktionen, wie Shreddersand, Shreddergranulat, Shredderflusen und Metallgranulat.

Die DE 197 03 577 A1 schlägt ein Verfahren zum Behandeln einer Shredder-Leichtfraktion aus Fahrzeug-Schrott vor, die feste organische sowie anorganische Stoffe mit mineralischen Anteilen enthält. Durch Separieren in verschiedene Endprodukte wird die Shredder-Leichtfraktion in mehrere Korngrößen getrennt. Unterhalb eines Trennschnittes für die Grobfraktion erzeugte weitere Fraktionen werden jeweils einer Trennstation zugeführt, in welcher die organischen Anteile von Metall und Mineralstoffen separiert werden. Die Grobfraktion wird zerkleinert, danach werden aus ihr zusammen mit den organischen Anteilen der weiteren Fraktionen die Eisenanteile entfernt.

In der WO 00/53324 wird ein Verfahren zur Aufbereitung von Shredder-Leichtabfällen und Verbundstoffen unter Verwendung einer Rotorprallmühle beschrieben, wobei einer Vorzerkleinerung der Fraktionen eine Abscheidung von ferromagnetischen Metallteilen nachgeschaltet ist, deren Austrag einer Rotorprallmühle als Mittelpunkt des Verfahrensablaufes zugeführt wird. Der Rotorprallmühle folgen als nächste Verfahrensschritte eine Grobsiebung und eine Windsichtung, in deren Ergebnis die erhaltenen leichten Kunststoffe einer Verbrennung zugeführt werden können. Der restliche Austrag wird einer Abscheidung von nichtferromagnetischen Metallen zugeführt.

Den aufgezeigten Verfahren ist gemeinsam, dass eine Verarbeitung mit dem Ziel einer möglichst weitgehenden Auftrennung der Shredder-Rückstände zu zumindest teilweise verwertbaren Endprodukten, insbesondere zu einer rohstofflich verwertbaren oder gemäß den aktuellen Anforderungen aus der ab dem Jahre 2005 in neuer Form greifenden TA Siedlungsabfall deponiefähigen Sand-Fraktion, ist nicht vorgesehen. Vor dem Hintergrund steigender gesetzlicher Anforderungen (EU-Altautorichtlinie, EU-Verbrennungsrichtlinie und andere) und auch steigender Deponiekosten und Anforderungen an das zu deponierende Gut (TA Siedlungsabfall), ist eine erhöhte Verwertungsquote sowie gegebenenfalls eine Vorbehandlung vor einer Ablagerung auf einer Deponie jedoch wünschenswert. So sieht die Altautoverordnung vom 1. April 1998 vor, dass ab dem Jahre 2015 über 95 Gew.% eines Altautos verwertet werden müssen. Verschärfte Anforderungen aus der im September 2000 verabschiedeten EU-Altautorichtlinie schreiben darüber hinaus vor, den Anteil werkstoff- und rohstofflich nutzbarer Stoffströme auf mindestens 85 Gew.% zu steigern. Eine Verwertung schließt demnach eine bloße energetische Nutzung, zum Beispiel in Müllverbrennungsanlagen, aus, bei der im Nebeneffekt auch eine deponiefähige, inerte Fraktion anfallen würde. Die ab dem Jahre 2005 einzuhaltende TA Siedlungsabfall fordert schwerpunktmäßig eine Abreicherung des Organikanteils und des Eluationspotentials von Schwermetallen der zu deponierenden Fraktionen. Für einen möglichen rohstofflichen Einsatz der anfallenden Sand-Fraktion, zum Beispiel als Zuschlagsstoff in Zementwerken, Sinteranlagen von Hochofenbetrieben oder als Zuschlagsstoff für die Hintermauer-Ziegelherstellung in Ziegeleien, muss insbesondere sichergestellt sein, dass störende Schwermetalle und organische Bestandteile weitestgehend entfernt wurden.

Der Erfindung liegt daher die Aufgabe zugrunde, ein Verfahren zur Verfügung zu stellen, mit dem Shredder-Rückstände verarbeitet werden können und in einem mechanischen Aufbereitungsprozess neben weiteren Endprodukten insbesondere eine qualitativ hochwertige und rohstofflich verwertbare oder zumindest nach künftigen Standards auf Siedlungsabfall-Deponien ablagerbare Sand-Fraktion erzeugbar ist.

Erfindungsgemäß wird diese Aufgabe durch ein Verfahren zur Aufbereitung von Shredder-Rückständen metallhaltiger Abfälle, insbesondere von Fahrzeugkarossen, mit den im Anspruch 1 genannten Merkmalen gelöst.

Bei dem erfindungsgemäßen Verfahren zur Aufbereitung von Shredder-Rückständen metallhaltiger Abfälle ist vorgesehen, das in einem Hauptprozess eine Rohsand-Fraktion erzeugt wird und die Rohsandfraktion in einem Veredlungsprozess durch die aufeinander folgenden Prozessschritte Dichtetrennung und Metallabscheidung in eine organikreiche Restfraktion, eine schwermetallhaltige Staub-Fraktion, eine organik- und metallarme Sandfraktion und eine NE-Metallfraktion aufgetrennt wird, wobei dem Hauptprozess ein Stoffstrom zugeführt wird, der erhalten ist durch die Auftrennung der Shredder-Rückstände in eine Shredder-Leichtfraktion und der Shredder-Schwerfraktion und durch die Aufbereitung der Shredder-Leichtfraktion in einem Vorprozess, wobei die Prozesse (Vorprozess und Hauptprozess) eine Abscheidung wenigstens, einer ferromagnetischen Fraktion, einer Nichteisen-Metallhaltigen Fraktion, einer Flusen-Fraktion und einer Granulat-Fraktion aufweisen.

Die bereitgestellten Endprodukte können entweder direkt einer Verwertung zugeführt werden oder gegebenenfalls in weiteren Veredlungsschritten zu verwertbaren Produkten hoher Qualität weiter verarbeitet werden. Die Sand-Fraktion kann insbesondere Verwendung als Zuschlagsstoff für den Einsatz in Hochofenbetrieben, Zementwerken oder Ziegeleien finden. Die für einen solchen Einsatz bereitzustellende Sand-Fraktion weist mindestens folgende Charakteristika auf:
- einen Glühverlust von < 30 Gew.%
- einen organisch gebundenen Kohlenstoffanteil von < 18 Gew.%
- einen Cl-Gehalt < 1,5 Gew.%
- einen Zn-Gehalt < 1,0 Gew.%
- einen Cu-Gehalt < 0,2 Gew.%
- einen Pb-Gehalt < 0,1 Gew.%.

Erst durch die weitgehende Entfernung der störenden Metallpartikel und organischen Bestandteile ist es möglich, Sand-Fraktionen aus Shredder-Rückständen wirtschaftlich sinnvoll und in großem Umfang einer rohstofflichen Verwertung zugänglich zu machen. Eine derart abgereicherte Sand-Fraktion erfüllt ebenfalls die Anforderungen an ein auf einer Siedlungsabfall-Deponie abzulagerndes Gut nach der ab 2005 gültigen TA Siedlungsabfall.

Als Endprodukte werden damit mindestens eine hochwertige Sand-Fraktion, eine ferromagnetische Fraktion, eine Nichteisen-Metall-haltige Fraktion, eine Flusen-Fraktion und eine Granulat-Fraktion erzeugt.
Gemäß einer Weiterbildung des erfindungsgemäßen Verfahrens wird dem Hauptprozess ein weiterer Stoffstrom zugeführt, der erhalten ist durch die Auftrennung der Shredder-Rückstände in die Shredder-Leichtfraktion und die Shredder-Schwerfraktion und durch die Aufbereitung der Shredder-Schwerfraktion in einem Vorprozess, wobei die Prozesse eine Abscheidung wenigstens einer ferromagnetischen Fraktion, einer Nichteisen-Metall-haltigen Fraktion, einer Flusen-Fraktion und einer Granulat-Fraktion aufweisen.

Aus der Shredder-Leichtfraktion werden vorzugsweise in einer Vorbehandlung aufgeschlossene Fe-, V2A- und Al-Anteile abgetrennt. Vorzugsweise wird diese Shredder-Leichtfraktion
- in einem ersten Zerkleinerungsaggregat aufgeschlossen,
- anschließend mittels wenigstens eines Magnetscheiders in mindestens eine ferromagnetische Fraktion und eine nicht-ferromagnetische Fraktion aufgetrennt,
- in einem zweiten Zerkleinerungsaggregat die nicht-ferromagnetische Fraktion aufgeschlossen,
- von dieser Fraktion mittels wenigstens einer Klassiereinrichtung eine feinkörnige Sand-Fraktion abgetrennt und
- die verbleibende Fraktion in wenigstens einer Dichtetrennungseinrichtung in eine Flusen-Fraktion und eine grobkörnige Schwergut-Fraktion aufgetrennt.

Durch die aufgezeigte Vorgehensweise mit dem stufenweisen Aufschluss der Shredder-Leichtfraktion und den zwischengeschalteten Verfahrensschritten zur Trennung der besonders abrasiv wirkenden ferromagnetischen Bestandteile, können die Betriebskosten insbesondere beim zweiten Zerkleinerungsaggregat geringgehalten werden. Eine weitere bevorzugte Ausführung sieht vor, dass im Vorprozess mittels einer Absaugeinrichtung zusätzlich eine Schaumstoff-Fraktion - im Wesentlichen aus Polyurethan bestehend - abgetrennt wird.

Weiterhin wird die Shredder-Schwerfraktion im Vorprozess vorzugsweise durch wenigstens einen Metallabscheider und wenigstens eine Klassiereinrichtung in wenigstens eine angereicherte, Nichteisen-Metall-haltige Fraktion, eine Schwergut-Fraktion und eine feinkörnige Sand-Fraktion getrennt. Zusätzlich ist es denkbar, dass von der Schwergut-Fraktion in wenigstens einer Dichtetrennungseinrichtung eine hochdichte Restfraktion abgetrennt wird. Die Auftrennung der Shredder-Schwerfraktion in verschiedene Stoffströme wird unter dem Gesichtspunkt einer möglichen gemeinschaftlichen Verarbeitung mit den zuvor bei den im Vorprozess der Verarbeitung der Shredder-Leichtfraktion entstehenden Stoffströmen vorgenommen.

Im Hauptprozess werden die Stoffströme aus den Vorprozessen vorzugsweise derart zusammengeführt, dass
die Sand-Fraktionen zu einer gemeinsamen Rohsand-Fraktion zusammengefasst werden und
die Schwergut-Fraktionen zu einer gemeinsamen Schwergut-Fraktion zusammengefasst, mittels eines Zerkleinerungsaggregates aufgeschlossen und über eine Dichtetrennungseinrichtung in die Granulat-Fraktion und in eine angereicherte, Nichteisen-Metall-haltige Fraktion aufgetrennt werden.

In diesem Prozessteilschritt fallen demnach die gewünschten End- und Zwischenprodukte Granulat, Rohsand und die Nichteisen-Metall-haltige Fraktion an. Die Nichteisen-Metall-haltigen Fraktionen können dann vorzugsweise in einem gemeinsamen Aufbereitungsschritt mittels geeigneter Verfahrensschritte, zum Beispiel einer Sandflotation und einer optischen Sortierung, zur Abtrennung von Leichtmetall-, Buntmetall- und sonstigen Metall-Fraktionen unterzogen werden. Die bei der Abtrennung anfallenden nicht-metallischen Restfraktionen können je nach Menge und Zusammensetzung an geeigneten Stellen in den Hauptprozess und/oder die Vorprozesse wieder eingespeist werden.

Die durch die aufgezeigten Aufbereitungsprozesse unter anderem bereitgestellte Rohsand-Fraktion ist bereits ein homogenes Produkt, dass heißt, flugfähige Bestandteile, Metalle, Granulat und Flusen sind bereits weitgehend abgetrennt worden. Die Rohsand-Fraktion kann aber erst durch die Veredelung von noch vorhandenen Metallpartikeln und organischen Bestandteilen befreit werden. Vorzugsweise erfolgt dabei die Dichtetrennung in einer Dichtetrennungseinrichtung. Nach der Dichtetrennung erfolgt eine Metallabscheidung. Zusätzlich kann vorgesehen sein, eine Feinkorn-Fraktion abzutrennen, in der sich schwermetallhaltige Stäube konzentrieren.

Weitere bevorzugte Ausgestaltungen des Verfahrens ergeben sich aus den übrigen verfahrensabhängigen Unteransprüchen.

Die Erfindung wird nachfolgend in einem Ausführungsbeispiel anhand der zugehörigen Zeichnungen näher erläutert. Es zeigen:
- Figur 1: eine Übersicht über die im Prozess der Aufbereitung der Shredder-Rückstände zu bestimmten Zeitpunkten entstehenden Endprodukte in einem Fließdiagramm und
- Figur 2: ein schematisches Fließdiagramm für die Prozessführung in den Vorprozessen und im Hauptprozess der Aufbereitung.

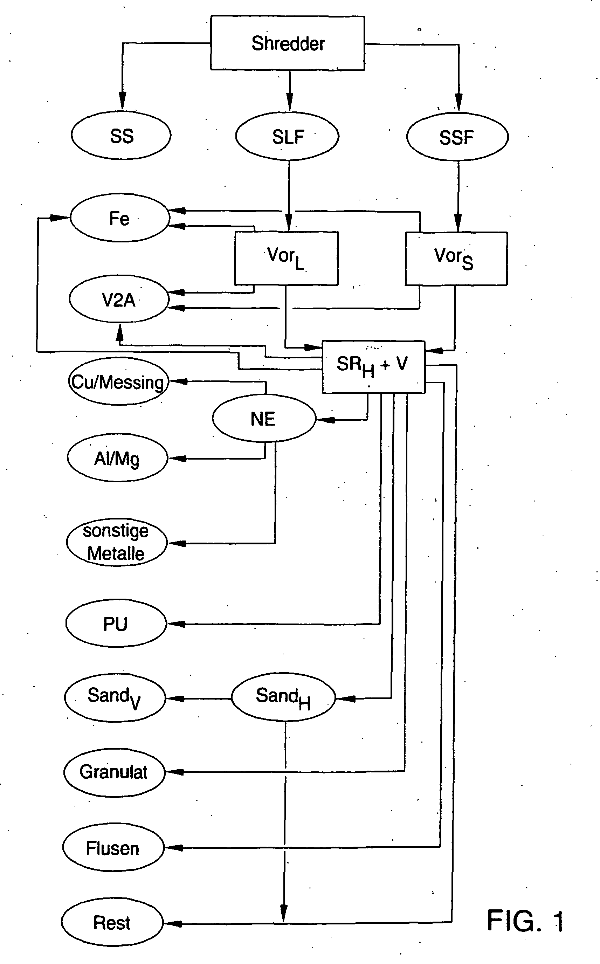

Die Figur 1 zeigt in einem Fließdiagramm, zu welchen Zeitpunkten Endprodukte nach dem erfindungsgemäßen Verfahren während der Aufbereitung der Shredder-Rückstände anfallen. Zunächst werden in einem an sich bekannten vorgeschalteten Shredderprozess in einem Shredder metallhaltige Abfälle, insbesondere von Fahrzeugkarossen, durch einen Zerkleinerungsprozess aufgeschlossen. Im Nachgang erfolgt eine Abtrennung einer flugfähigen Leichtfraktion durch eine Absaugvorrichtung (Shredder-Leichtfraktion SLF). Der nach der Absaugung verbleibende schwere, nicht-flugfähige Stoffstrom wird auf einem Permanent-Magnetscheider in eine ferromagnetische und eine nicht-ferromagnetische Fraktion getrennt. Die ferromagnetische Fraktion wird als Shredder-Schrott SS bezeichnet und stellt das primäre, direkt in der Metallurgie einsetzbare Produkt des Shredders dar. Die schwere, nicht-flugfähige sowie nicht-ferromagnetische Fraktion wird als Shredder-Schwerfraktion SSF bezeichnet. In einem weiteren, hier nicht dargestellten Vorbehandlungsschritt können von der Shredder-Leichtfraktion SLF mittels eines Magnetscheiders noch vorhandene ferromagnetische Bestandteile abgetrennt werden. Der dann verbleibende Stoffstrom der Shredder-Leichtfraktion SLF sowie die Shredder-Schwerfraktion SSF werden nun gemeinschaftlich als Shredder-Rückstände in die gewünschten Endprodukte aufgetrennt.
Die Prozessführung sieht dazu einen Vorprozess Vor_{L} für die Shredder-Leichtfraktion SLF, einen Vorprozess Vor_{S} für die Shredder-Schwerfraktion SSF, einen gemeinsamen Hauptprozess SR_{H} und einen Veredelungsprozess V zur abschießenden Aufarbeitung zumindest eines Teiles der in den Vorprozessen Vor_{L}, Vor_{S} entstehenden primären Stoffströme vor. Als Endprodukte gemäß dem Ausführungsbeispiel entstehen Fraktionen, die überwiegend und mit möglichst hoher Reinheit aus Eisen Fe, Stahl V2A, Flusen, organik- und metallfreiem Sand Sand_{V}, Granulat, Schaumstoff PU und einem zu beseitigenden Rest bestehen. Weiterhin kann eine Nichteisen-Metall-haltige Fraktion NE abgetrennt werden, die durch entsprechende Prozessführung wiederum eine Aufteilung in Fraktionen mit Buntmetallen Cu/Messing, Leichtmetallen Al/Mg und sonstige Metalle ermöglicht. Die entstehenden Endprodukte können bis auf die Restfraktion einer metallurgischen, werkstofflichen, rohstofflichen und energetischen Verwertung oder im Falle der Sand-Fraktion mindestens einer geordneten Ablagerung auf einer Siedlungsabfall-Deponie zugeführt werden. Der Veredelungsprozess V kann insbesondere unter dem Gesichtspunkt der Bereitstellung einer organik- und metallarmen Sand-Fraktion Sandᵥ ausgestaltet werden, die vorrangig Einsatz als Zuschlagsstoff in Hochofenprozessen, Zementwerken oder Ziegeleien finden soll, mindestens aber eine Ablagerung auf einer Siedlungsabfall-Deponie gemäß den Anforderung der TA Siedlungsabfall ab dem Jahre 2005 erlaubt. Dazu muss die Sand-Fraktion (Sandᵥ) mindestens folgende Charakteristika aufweisen:
- einen Glühverlust von < 30 Gew.%
- einen organisch gebundenen Kohlenstoffanteil von < 18 Gew.%
- einen Cl-Gehalt < 1,5 Gew.%
- einen Zn-Gehalt < 1,0 Gew.%
- einen Cu-Gehalt < 0,2 Gew.%
- einen Pb-Gehalt < 0,1 Gew.%.

Die nachfolgend geschilderten Prozessschritte ermöglichen insbesondere die Separation einer Sand-Fraktion Sand_{V} aus den heterogenen Shredder-Rückständen, welche der genannten Spezifikation entspricht.

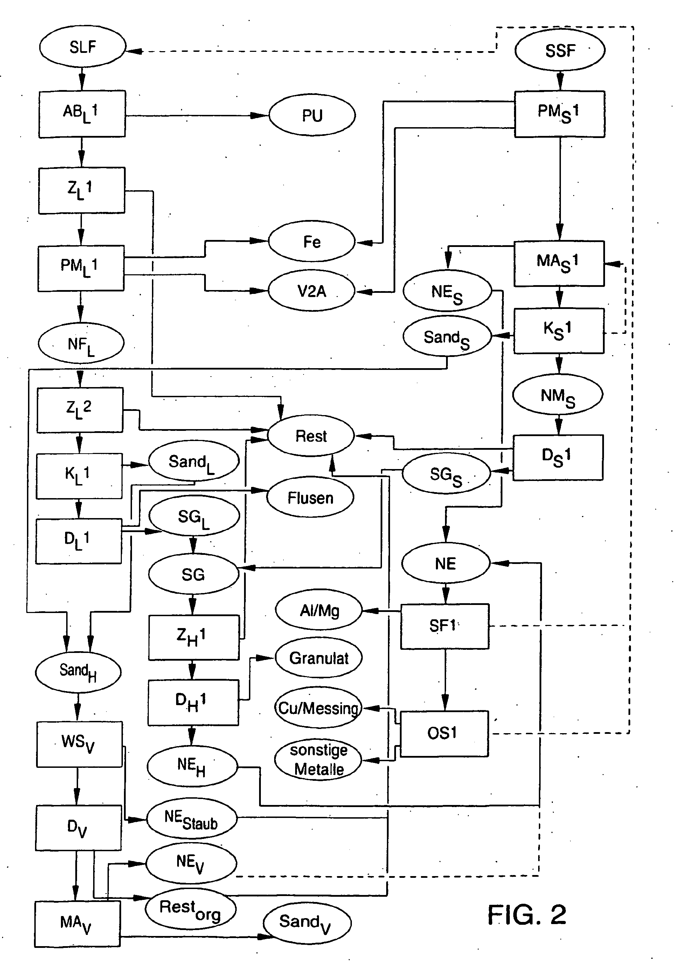

In der Figur 2 sind schematisch wesentliche Komponenten der Anlage zur Aufbereitung der Shredder-Rückstände und die jeweils während der Verfahrensführung an diesen Komponenten anfallenden Zwischen- oder Endprodukte in einem Fließdiagramm dargestellt. Der Übersicht wegen sind die während des Verfahrens erzeugten Endprodukte mittig angeordnet. Der Vorprozess Vor_{L} zur Aufbereitung der Shredder-Leichtfraktion SLF ist schematisch im linken oberen Teil, der Vorprozess Vor_{S} zur Aufbereitung der Shredder-Schwerfraktion SSF im rechten oberen Teil, der Hauptprozess SR_{H} mittig im unteren Teil und der Veredelungsprozess V im linken unteren Teil der Zeichnung dargestellt.

Die Shredder-Schwerfraktion SSF wird zunächst einer zweistufigen Fe- und V2A-Separation mittels eines Permanent-Magnetscheiders PM_{S}1 unterzogen. Nach der Fe- und V2A-Abscheidung erfolgt eine Klassierung des Reststromes und eine Abscheidung Nichteisen-Metall-haltiger Fraktionen NE_{S}. Dies kann beispielsweise derart erfolgen, dass zunächst eine Klassierung in verschiedene Fraktionen, beispielsweise größer und kleiner 20 mm, erfolgt und diese Fraktion jeweils separat dem Metallabscheider MA_{S}1 zugeführt werden. Denkbar sind selbstverständlich noch zusätzliche Klassierungsstufen. Im Vordergrund steht dabei eine möglichst saubere stoffliche Trennung in die Nichteisen-Metall-haltigen Fraktionen NE_{S} und die verbleibenden metallarmen Fraktionen NM_{S}. Die Klassiereinrichtung K_{S}1 sieht ferner vor, dass metallarme Fraktionen NM_{S} mit einem Korndurchmesser vorzugsweise < 6 mm in einer Sand-Fraktion Sand_{S} abgetrennt werden.

Die verbleibende grobkörnige metallarme Fraktion NM_{S} wird anschließend mit einer Dichtetrennungseinrichtung D_{S}1 in eine Schwergut-Fraktion SG_{S} sowie eine hochdichte Restfraktion Rest aufgetrennt. Damit soll verhindert werden, dass bei der Weiterbehandlung der Schwergut-Fraktion SG_{S} in nachgeschalteten Zerkleinerungsaggregaten noch hochabrasive und scharfkantige Materialien, wie zum Beispiel Edelstahlkugeln, im Mahlraum vorhanden sind. Zusätzlich kann an dieser Stelle nochmals ein Metallabscheider installiert werden, um letzte verschleißfördernde, massive Metallverunreinigungen abzutrennen. Zusammenfassend liefert der Vorprozess Vorₛ demnach eine Eisen-Fraktion Fe, eine Stahl-Fraktion V2A, eine Nichteisen-Metallhaltige Fraktion NE_{S}, eine Sand-Fraktion Sand_{S} und eine Schwergut-Fraktion SG_{S}.

Im Vorprozess Vor_{L} wird ausgehend von der Shredder-Leichtfraktion SLF zunächst eine Schaumstoff-Fraktion PU - überwiegend aus dem leicht-flugfähigen Polyurethan bestehend - in der Absaugeinrichtung AB_{L}1 abgetrennt. Die abgetrennten Schaumstoffstücke werden pneumatisch in einen Presscontainer gefördert und dort automatisch verdichtet. Diese Fraktion kann direkt verwertet oder gegebenenfalls einer weiteren, hier nicht weiter ausgeführten Veredelungsstufe zugeführt werden.

Die verbleibende Fraktion wird nun in einem ersten Zerkleinerungsaggregat Z_{L}1 aufgeschlossen, und zwar derart, dass ein Austrag des Aggregats Z_{L}1 Partikel mit einem Durchmesser < 50 mm enthält. Um eine Beanspruchung des Zerkleinerungsaggregats Z_{L}1 möglichst geringzuhalten, kann vorgesehen sein, dass eine hier nicht dargestellte Klassiereinrichtung zur Separation und Zuführung einer Fraktion mit einem Durchmesser von > 50 mm vorgeschaltet wird. Von der zerkleinerten Fraktion wird mittels eines Permanent-Magnetscheiders PM_{L}1 eine Eisenfraktion Fe und eine Stahlfraktion V2A abgetrennt. Die verbleibende nicht-ferromagnetische Fraktion NF_{L} wird nun einem zweiten Zerkleinerungsaggregat Z_{L}2 zugeführt, in dem ein weiterer Aufschluss des Materials erfolgt. Ein Austrag des Zerkleinerungsaggregates Z_{L}2 wird dabei mit < 10 mm ausgelegt. Auch hier kann über eine nicht dargestellte Klassiereinrichtung die Beschickung des Zerkleinerungsaggregates Z_{L}2 auf eine Fraktion mit einem Durchmesser > 10 mm beschränkt werden.

Von der nun gut aufgeschlossenen nicht-ferromagnetischen Fraktion NF_{L} wird in einer weiteren Klassiereinrichtung K_{L}1 eine feinkörnige Sand-Fraktion Sand_{L} abgetrennt. Eine Korngröße der Sand-Fraktion Sand_{L} wird vorzugsweise auf < 4 mm festgelegt. Die verbleibende Fraktion wird einer Windsichtung und Dichtetrennung in einer entsprechenden Einrichtung D_{L}1 unterzogen. In der Einrichtung D_{L}1 wird eine leichte Fraktion aus Flusen mittels Querstromsichter über eine Schwergutklappe geblasen. Aufgrund der vorherigen Förderung auf einem Vibrationsförderer hat sich das schwerere Material bereits nach unten abgesetzt, so dass die unterliegende Schwerfraktion zwangsläufig nach unten in ein Schwergutaustrag fällt (Schwergut-Fraktion SG_{L}). Zusammengefasst können in dem Vorprozess Vor_{L} die End- und Zwischenprodukte Schaumstoffstücke PU, Eisen Fe, Stahl V2A, Sand Sand_{L} und Schwergut SG_{L} bereitgestellt werden. Die während der Bearbeitung in den Zerkleinerungsaggregaten Z_{L}1 und Z_{L}2 anfallenden schwermetall- und organikhaltigen Stäube und Schlämme werden der Restfraktion Rest zugeführt.

Im Hauptprozess SR_{H} werden zunächst die Sand-Fraktionen Sand_{L}, Sand_{S} zu einer gemeinsamen Rohsahd-Fraktion Sand_{H} zusammengefasst. Zur Erreichung der vorgenannten Spezifikationen für die rohstoffliche Verwertung als Zuschlagsstoff muss die Rohsand-Fraktion Sand_{H} weiter aufgetrennt werden. Wesentlich ist dabei, dass die veredelte Sand-Fraktion Sand_{V} hinreichend hohe Anteile an Oxiden der Elemente Eisen, Aluminium, Silizium und Calcium enthält, die primäre Rohstoffe substituieren können. Weiterhin soll die Konzentration potentieller Prozess- oder Produktstörstoffe möglichst niedrig gehalten werden. Störstoffe der genannten Art können je nach Verwendungszweck beispielsweise die Metalle Kupfer, Zink, Blei, Chrom, aber auch Natrium, Kalium und Magnesium sein. Ferner muss der Organikanteil, insbesondere der Anteil halogenhaltiger Kunststoffe, hinreichend abgesenkt werden. Eine solche veredelte Sand-Fraktion Sand_{V} erfüllt damit ebenfalls bereits Anforderungen der TA Siedlungsabfall (Anforderungen ab 2005) für ein auf einer Siedlungsabfall-Deponie abzulagerndes Gut.

Von der Rohsand-Fraktion Sand_{H} wird zunächst eine Staub-Fraktion NE_{Staub} aus Feinstkorn und leicht-flugfähigen Organikanteilen mittels eines Windsichters WS_{V} abgetrennt. Die Staub-Fraktion NE_{Staub} enthält insbesondere Schwermetallstäube und wird der Reststofffraktion zur Beseitigung zugeführt.

Die Schwerfraktion des Windsichters WS_{V} wird einem Luft-Setz-Tisch (Dichtetrennungseinrichtung D_{V}) zugeführt. Dort erfolgt die Abtrennung einer leichten, organikreichen Restfraktion Rest_{org}. Diese kann ebenfalls direkt aus dem Prozess ausgeschleust und mit der Restfraktion Rest zusammengefasst werden. Anschließend wird in einem Allmetallseparator MA_{V} die verbleibende Schwerfraktion von restlichen metallischen Bestandteilen, vorwiegend NE-Metallen, befreit (NE-Metallfraktion NE_{V}). Die NE-Metallfraktion NE_{V} kann in die NE-Metallaufbereitung übergeleitet werden. Zusammengefasst wird während des Veredelungsprozesses V demnach die Rohsand-Fraktion Sand_{H} in eine Staub-Fraktion NE_{Staub}, NE-Metallfraktion NE_{V}, eine organikreiche Restfraktion Rest_{org} und eine organik- und metallfreie Sand-Fraktion Sand_{V} aufgetrennt.

Auch die Schwergut-Fraktionen SG_{L} und SG_{S} werden während des Hauptprozesses SR_{H} zu einer gemeinsamen Schwergut-Fraktion SG zusammengefasst. Diese wird nachfolgend in einem weiteren Zerkleinerungsaggregat Z_{H}1 erneut aufgeschlossen. Ein Austrag der Zerkleinerungsaggregate Z_{H}1 wird mit < 8 mm ausgelegt. Das Zerkleinerungsaggregat Z_{H}1 ist üblicherweise als Schneidmühle ausgebildet, damit an dieser Stelle ein optimaler Materialaufschluss erreicht wird. Nach der Zerkleinerung erfolgt eine Dichtetrennung auf Luft-Setz-Tischen (Dichtetrennungseinrichtung D_{H}1). Die abgetrennte Leichtfraktion besteht überwiegend aus Kunststoff in granulierter Form. Das Granulat kann gegebenenfalls in einem zusätzlichen Veredelungsprozess weiter aufgearbeitet werden. Die verbleibende Schwerfraktion NE_{H} besteht größtenteils aus Nicht-Eisenmetallen, und zwar überwiegend aus Kupfer-Litzen. Die Fraktion NE_{H} kann daher bereits an dieser Stelle dem Prozess entzogen werden, aber auch mit der Nichteisen-Metall-haltigen Fraktion NE_{S} zu einer gemeinsamen Fraktion NE zusammengeführt werden und gemeinsam aufbereitet werden.

Die Aufbereitung der Nichteisen-Metall-haltigen Fraktion NE kann im Wesentlichen mittels einer Sandflotationsanlage SF1 und eines optischen Sortierers OS1 erfolgen. Mit einer Sandflotation ist es möglich, eine Leichtmetall-Fraktion vorwiegend aus Aluminium Al und Magnesium Mg von einer Schwermetall-Fraktion trockenmechanisch zu trennen. Anzumerken ist, dass der hier verwendete Sand als Separationsmedium nichts mit der abgetrennten Fraktion "Sand" aus den Shredder-Rückständen zu tun hat. Die Schwermetalle sinken in das Sandbett, während die Leichtmetalle auf dem Sandbett aufschwimmen. Über eine Trennscheide werden ein leichtmetallhaltiger Oberstrom und der mit den Schwermetallen angereicherte Unterstrom getrennt. In einem zur Sandflotation gehörenden Prozessschritt werden die Metallkonzentrate wieder vom Trennmedium Sand getrennt. Die abgetrennte Aluminium- und Magnesium-Fraktion Al/Mg kann gegebenenfalls noch weiter aufgetrennt werden.

Die abgetrennte Schwerfraktion (insbesondere Zink Zn, Kupfer Cu, Messing, Blei Pb sowie eventuell V4A-Stahl) wird durch den optischen Sortierer OS1 in Buntmetalle Kupfer/Messing und sonstige Metalle aufgetrennt. Eventuell hier anfallende nicht-metallische Reste können je nach Menge und Zusammensetzung an geeigneter Stelle, wie beispielsweise hier in den Vorprozess Vor_{L}, eingespeist werden. Zusammengefasst werden im Hauptprozess SR_{H} mit anschließender NE-Metallaufbereitung eine Al/Mg-Fraktion, eine Cu/Messing-Fraktion, eine Fraktion mit sonstigen Metallen, eine Granulat-Fraktion und eine Rohsand-Fraktion Sand_{H} bereitgestellt. Die Rohsand-Fraktion Sand_{H} wird - wie bereits erläutert - im Veredelungsprozess V weiter aufgereinigt, so dass als Endprodukt die organik- und metallfreie Sand-Fraktion Sand_{V} anfällt.

### Bezugszeichenliste

- AB_{L}1: Absaugeinrichtung (Abtrennung Schaumstoff-Fraktion)
- Al/Mg: Leichtmetall-Fraktion
- Cu/Messing: Buntmetall-Fraktion
- D_{H}1, D_{L}1, D_{S}1, Dv: Dichtetrennungseinrichtungen
- Fe: Eisen-Fraktion
- Flusen: Flusen-Fraktion
- Granulat: Granulat-Fraktion
- K_{L}1, K_{S}1: Klassiereinrichtungen
- MA_{S}1, MA_{V}: Metallabscheider / Allmetallseparator
- NE, NE_{H}, NE_{L}, NE_{S}, NE_{Staub}, NE_{V}: Nichteisen-Metall-haltigen Fraktionen
- NF_{L}: nicht-ferromagnetische Fraktion
- NM_{S}: metallarme Fraktion
- OS1: optischer Sortierer
- PM_{L}1, PM_{S}1: Permanent-Magnetscheider
- PU: Schaumstoff-Fraktion
- Rest, Rest_{org}: (organische) Restfraktionen
- Sand_{H}: Rohsand-Fraktion
- Sand_{L}, Sand_{S}: Sand-Fraktionen der Vorprozesse
- Sand_{V}: organik- und metallfreie Sand-Fraktion
- SF1: Sandflotationsanlage
- SG, SG_{L}, SG_{S}: Schwergut-Fraktionen
- SLF: Shredder-Leichtfraktion
- Sonstige Metalle: Fraktion mit sonstigen Metallen
- SR_{H}: Hauptprozess
- SS: Shredder-Schrott
- SSF: Shredder-Schwerfraktion
- V: Veredelungsprozess für den Rohsand
- V2A: Stahl-Fraktion
- Vor_{L}: Vorprozess für die Shredder-Leichtfraktion
- Vor_{S}: Vorprozess für die Shredder-Schwerfraktion
- WS_{V}: Windsichter
- Z_{L}1, Z_{L}2, Z_{H}1: Zerkleinerungsaggregate

## Patentansprüche

1. Verfahren zur Aufbereitung von Shredder-Rückständen metallhaltiger Abfälle, insbesondere von Fahrzeugkarossen, bei dem in einem Hauptprozess (SR_{H}) eine Rohsand-Fraktion (Sand_{H}) erzeugt wird und die Rohsandfraktion (Sand_{H}) in einem Veredlungsprozess (V) durch die aufeinander folgenden Prozessschritte Dichtetrennung und Metallabscheiblung in eine organikreiche Restfraktion (REST_{org}), eine schwermetallhaltige Staub-Fraktion (NE_{Staub}), eine organik- und metallarme Sandfraktion (SAND_{V}) und eine NE-Metallfraktion (NE_{V}) aufgetrennt wird, wobei dem Hauptprozess (SR_{H}) ein Stoffstrom zugeführt wird, der erhalten ist durch die Auftrennung der Shredder-Rückstände in eine Shredder-Leichtfraktion (SLF) und eine Shredder-Schwerfraktion (SSF) und durch die Aufbereitung der Shredder-Leichtfraktion (SLF) in einem Vorprozess (Vor_{L}). wobei der Vorprozess (Vor_{L}) und der Hauptprozess (SR_{H}) eine Abscheidung wenigstens einer ferromagnetischen Fraktion (Fe/V2A), einer Nichteisen-Metall-haltigen Fraktion (NE), einer Flusen-Fraktion (Flusen) und einer Granulat-Fraktion (Granulat) aufweisen.

2. Verfahren nach Anspruch 1, **dadurch gekennzeichnet, dass** dem Hauptprozess (SR_{H}) ein weiterer Stoffstrom zugeführt wird, der erhalten ist durch die Auftrennung der Shredder-Rückstände in die Shredder-Leichtfraktion (SLF) und die Shredder-Schwerfraktion (SSF) und durch die Aufbereitung der Shredder-Schwerfraktion (SSF) in einem Vorprozess, wobei die Prozesse eine Abscheidung wenigstens einer ferromagnetischen Fraktion (Fe/V2A), einer Nichteisen-Metall-haltigen Fraktion (NE), einer Flusen-Fraktion (Flusen) und einer Granulat-Fraktion (Granulat) aufweisen.

3. Verfahren nach Anspruch 1 oder 2, **dadurch gekennzeichnet, dass** die Shredder-Leichtfraktion (SLF) einer weiteren Vorbehandlung mittels eines Magnetscheiders zur Abtrennung von ferromagnetischen Restfraktionen unterworfen wird.

4. Verfahren nach einem der Ansprüche 1 bis 3, **dadurch gekennzeichnet, dass** im Vorprozess (Vor_{L}) ausgehend von der vorbehandelten Shredder-Leichtfraktion (SLF) durch Zerkleinerung, Metallabscheidung, Klassierung und Dichtetrennung ferromagnetische Fraktionen (Fe/V2A), eine feinkörnige Sand-Fraktion (Sand_{L}) und eine Flusen-Fraktion (Flusen) von einer grobkörnigen Schwergut-Fraktion (SG_{L}) abgetrennt werden.

5. Verfahren nach einem der Ansprüche 1 bis 3, **dadurch gekennzeichnet, dass** von der vorbehandelten Shredder-Leichtfraktion (SLF) im Vorprozess (Vor_{L}) mittels einer Absaugeinrichtung (AB_{L}1) zusätzlich eine Schaumstoff-Fraktion (PU) abgetrennt wird.

6. Verfahren nach Anspruch 5, **dadurch gekennzeichnet, dass** die Zerkleinerung und Klassierung eine Schwergut-Fraktion (SG_{L}) mit einem Durchmesser von vorzugsweise 4 bis 10 mm liefert.

7. Verfahren nach einem der Ansprüche 2 bis 6, **dadurch gekennzeichnet, dass** von der Shred-der-Schwerfraktion (SSF) im Vorprozess (Vor_{S}) durch Metallabscheidung, Klassierung und Dichtetrennung mindestens eine Nichteisen-Metall-haltige Fraktion (NE_{S}), eine feinkörnige Sand-Fraktion (Sand_{S}) und eine hochdichte Restfraktion (Rest) von einer Schwergut-Fraktion (SG_{S}) abgetrennt werden.

8. Verfahren nach Anspruch 7, **dadurch gekennzeichnet, dass** die Klassierung eine Schwergut-Fraktion (SG_{S}) mit einem Durchmesser von vorzugsweise > 6 mm liefert.

9. Verfahren nach einem der Ansprüche 1 bis 8, **dadurch gekennzeichnet, dass** im Hauptprozess (SR_{H}) die mindestens eine Schwergut-Fraktion (SG_{L}, SG_{S}) mittels eines Zerkieinerungsaggregates (Z_{H}1) aufgeschlossen und über eine Dichtetrennungseinrichtung (D_{H}1) in die Granulat-Fraktion (Granulat) und in eine angereicherte, Nichteisen-Metall-haltige Fraktion (NE_{H}) aufgetrennt wird.

10. Verfahren nach einem der Ansprüche 7 bis 9, **dadurch gekennzeichnet, dass** im Hauptprozess (SR_{H}) die Sand-Fraktionen (Sand_{L}, Sand_{S}) zur gemeinsamen Rohsand-Fraktion (Sand_{H}) zusammengefasst werden.

11. Verfahren nach einem der Ansprüche 7 bis 10, **dadurch gekennzeichnet, dass** die Metall-Fraktionen (NE_{H}, NE_{S}) zur gemeinsamen Metall-Fraktion (NE) zusammengefasst werden.

12. Verfahren nach einem der Ansprüche 1 bis 11, **dadurch gekennzeichnet, dass** vor der Dichtetrennung die schwermetallhaltige Staub-Fraktion (NE_{Staub}) abgetrennt wird.

13. Verfahren nach einem der Ansprüche 1 bis 12, **dadurch gekennzeichnet, dass** die bei der Abtrennung im Veredelungsprozess (V) anfallende, Nichteisen-Metall-haltige Fraktion (NE_{V}) je nach Menge und Zusammensetzung in einen Aufbereitungsprozess der Nichteisen-Metall-haltigen Fraktion (NE) integriert wird.

14. Verfahren nach einem der Ansprüche 1 bis 12, **dadurch gekennzeichnet, dass** die Sand-Fraktion (Sand_{V}) mindestens folgende Charakteristika aufweist:
- einen Glühverlust von < 30 Gew. %
- einen organisch gebundenen Kohlenstoffanteil von < 18 Gew. %
- einen Cl-Gehalt < 1,5 Gew. %,
- einen Zn-Gehalt < 1,0 Gew. %,
- einen Cu-Gehalt < 0,2 Gew. %
- einen Pb-Gehalt < 0,1 Gew. %

## Claims

1. Method for treating shredder residues of metal-containing waste, especially vehicle bodies, in which method, in a main process (SR_{M}), a crude sand fraction (sand_{M}) is produced and, in a refining process (R), the crude sand fraction (sand_{M}) is split by means of the successive process steps of density separation and metal separation into an organic-rich residual fraction (REST_{org}), a heavy metal-containing dust fraction (NF_{Dust}), a low-organic and low-metal sand fraction (SAND_{R}) and a non-ferrous metal fraction (NF_{R}), a material stream being fed to the main process (SR_{M}), which material stream is obtained by the splitting of the shredder residues into a shredder light fraction (SLF) and a shredder heavy fraction (SHF) and by the treatment of the shredder light fraction (SLF) in a preliminary process (Pre_{L}), the preliminary process (Pre_{L}) and the main process (SR_{M}) having separation of at least a ferromagnetic fraction (Fe/V2A), a non-ferrous-metal-containing fraction (NF), a fluff fraction (fluff) and a granulate fraction (granulate).

2. Method according to Claim 1, **characterized in that** a further material stream is fed to the main process (SR_{M}), which further material stream is obtained by the splitting of the shredder residues into the shredder light fraction (SLF) and the shredder heavy fraction (SHF) and by the treatment of the shredder heavy fraction (SHF) in a preliminary process, the processes having separation of at least a ferromagnetic fraction (Fe/V2A), a non-ferrous-metal-containing fraction (NF), a fluff fraction (fluff) and a granulate fraction (granulate).

3. Method according to Claim 1 or 2, **characterized in that** the shredder light fraction (SLF) is subjected to a further pre-treatment by means of a magnetic separator for the separation of ferromagnetic residual fractions.

4. Method according to one of Claims 1 to 3, **characterized in that** in the preliminary process (Pre_{L}), starting from the pretreated shredder light fraction (SLF), by crushing, metal separation, classification and density separation, ferromagnetic fractions (Fe/V2A), a fine-grained sand fraction (sand_{L}) and a fluff fraction (fluff) are separated from a coarse-grained heavy material fraction (HM_{L}).

5. Method according to one of Claims 1 to 3, **characterized in that** from the preheated shredder light fraction (SLF), in the preliminary process (Pre_{L}), a foamed plastic fraction (PU) is additionally separated by means of a suction device (SU_{L}1).

6. Method according to Claim 5, **characterized in that** the crushing and classification delivers a heavy material fraction (HM_{L}) with a diameter of preferably from 4 to 10 mm.

7. Method according to one of Claims 2 to 6, **characterized in that** at least one non-ferrous-metal-containing fraction (NF_{S}), a fine-grained sand fraction (sand_{S}) and a highly dense residual fraction (residual) from a heavy material fraction (HM_{S}) are separated from the shredder heavy fraction (SHF) in the preliminary process (Pre_{S}) by metal deposition, classification and density separation.

8. Method according to Claim 7, **characterized in that** the classification delivers a heavy material fraction (HM_{S}) with a diameter of preferably > 6 mm.

9. Method according to one of Claims 1 to 8, **characterized in that** in the main process (SR_{M}) the at least one heavy material fraction (HM_{L}, HM_{H}) is disintegrated by means of a crushing unit (CR_{M}1) and is split by a density separator (DS_{H}1) into the granulate fraction (granulate) and into an enriched, non-ferrous-metal-containing fraction (NF_{M}).

10. Method according to one of Claims 7 to 9, **characterized in that** in the main process (SR_{H}) the sand fractions (sand_{L}, sand_{H}) are combined into the common crude sand fraction (sand_{M}).

11. Method according to one of Claims 7 to 10, **characterized in that** the metal fractions (NF_{M}, NF_{H}) are combined into the common metal fraction (NF).

12. Method according to one of Claims 1 to 11, **characterized in that** the heavy-metal-containing dust fraction (NF_{dust}) is separated off prior to the density separation.

13. Method according to one of Claims 1 to 12, **characterized in that** the non-ferrous-metal-containing fraction (NF_{R}) obtained in the separation in the refining process (R) is integrated, according to quantity and composition, into a reprocessing process for the non-ferrous-metal-containing fraction (NF).

14. Method according to one of Claims 1 to 12, **characterized in that** the sand fraction (sand_{V}) has at least the following characteristics:
- a loss on ignition of < 30% by weight
- an organically bonded carbon component of < 18% by weight
- a Cl content of < 1.5% by weight
- a Zn content of < 1.0% by weight
- a Cu content of < 0.2% by weight
- a Pb content of < 0.1% by weight.

## Revendications

1. Procédé de préparation de résidus de déchiquetage de déchets contenant des métaux, en particulier de carrosseries de véhicule, dans lequel
une fraction (Sand_{H}) de sable brut est formée dans un traitement principal (SR_{H}) et la fraction de sable brut (Sand_{H}) est séparée, par les étapes de traitement successives de séparation gravimétrique et séparation des métaux en une fraction résiduelle riche en matières organiques (REST_{org}), une fraction contenant des poussières de métaux lourds (NE_{Staub}), une fraction de sable pauvre en matières organiques et en métaux (SAND_{V}) et une fraction contenant des métaux non ferreux (NE_{V}), dans un traitement d'épuration (V),
un écoulement de matière obtenu par la séparation des résidus de déchiquetage en une fraction légère de déchiquetage (SLF) et une fraction lourde de déchiquetage (SSF) et par le traitement de la fraction légère de déchiquetage (SLF) dans un traitement préalable (Vor_{L}) est apporté dans le traitement principal (SR_{H}),
le traitement préalable (Vor_{L}) et le traitement principal (SR_{H}) présentant une séparation d'au moins une fraction ferromagnétique (Fe/V2A), une fraction (NE) contenant des métaux non ferreux, une fraction (Flusen) volante et une fraction de granulés (Granulat).

2. Procédé selon la revendication 1, **caractérisé en ce qu'**un autre écoulement de matière obtenu par la séparation des résidus de déchiquetage en la fraction légère de déchiquetage (SLF) et la fraction lourde de déchiquetage (SSF) et par le traitement de la fraction lourde de déchiquetage (SSF) dans un traitement préalable est apporté au traitement principal (SR_{H}), les traitements présentant une séparation d'au moins une fraction ferromagnétique (Fe/V2A), une fraction (NE) contenant des métaux non ferreux, une fraction volante (Flusen) et une fraction de granulés (Granulat).

3. Procédé selon la revendication 1 ou 2, **caractérisé en ce que** la fraction légère de déchiquetage (SLF) subit un autre pré-traitement à l'aide d'un séparateur magnétique qui sépare les fractions ferromagnétiques résiduelles.

4. Procédé selon l'une des revendications 1 à 3, **caractérisé en ce que** dans le traitement préalable (Vor_{L}), partant de la fraction légère de déchiquetage (SLF) prétraitée, on sépare par déchiquetage, séparation des métaux, classification et séparation gravimétrique des fractions ferromagnétiques (Fe/V2A), une fraction de sable à grains fins (Sand_{L}) et une fraction volante (Flusen) d'une fraction lourde (SG_{L}) en grains grossiers.

5. Procédé selon l'une des revendications 1 à 3, **caractérisé en ce qu'**une fraction de mousse (PU) est en outre séparée de la fraction légère de déchiquetage (SLF) prétraitée dans le traitement préalable (Vor_{L}), au moyen d'un dispositif d'aspiration (AB_{L}1).

6. Procédé selon la revendication 5, **caractérisé en ce que** le déchiquetage et la classification délivrent une fraction lourde (SG_{L}) d'un diamètre de préférence de 4 à 10 mm.

7. Procédé selon l'une des revendications 2 à 6, **caractérisé en ce qu'**au cours du traitement préalable (Vor_{S}), on sépare de la fraction lourde de déchiquetage (SSF) au moins une fraction (NE_{S}) contenant des métaux non ferreux, une fraction de sable (Sand_{S}) en grains fins et une fraction résiduelle (Rest) à haute densité d'une fraction lourde (SG_{S}) par séparation des métaux, classification et séparation gravimétrique.

8. Procédé selon la revendication 7, **caractérisé en ce que** la classification délivre une fraction lourde (SG_{S}) d'un diamètre de préférence de > 6 mm.

9. Procédé selon l'une des revendications 1 à 8, **caractérisé en ce qu'**au cours du traitement principal (SR_{H}), l'au moins une fraction lourde (SG_{L}, SG_{S}) est séparée au moyen d'une machine de déchiquetage (Z_{H}1) et par un dispositif de séparation densimétrique (D_{H}1) en la fraction de granulés (Granulat) et en une fraction enrichie (NE_{H}) contenant des métaux non ferreux.

10. Procédé selon l'une quelconque des revendications 7 à 9, **caractérisé en ce que** les fractions de sable (Sand_{L}, Sand_{S}) sont rassemblées dans le traitement principal (SR_{H}) en la fraction (Sand_{H}) de sable brut.

11. Procédé selon l'une des revendications 7 à 10, **caractérisé en ce que** les fractions métalliques (NE_{H}, NE_{S}) sont rassemblées en une fraction métallique commune (NE).

12. Procédé selon l'une des revendications 1 à 11, **caractérisé en ce que** la fraction de poussière contenant des métaux lourds (NE_{Staub}) est séparée avant la séparation gravimétrique.

13. Procédé selon l'une des revendications 1 à 12, **caractérisé en ce que** la fraction (NE_{V}) contenant des métaux non ferreux et produite de la séparation au cours du traitement d'épuration (V) est intégrée en fonction de sa quantité et de sa composition dans un traitement de préparation de la fraction (NE) contenant des métaux non ferreux.

14. Procédé selon l'une des revendications 1 à 12, **caractérisé en ce que** la fraction de sable (Sand_{V}) présente au moins les caractéristiques suivantes :
- une perte à l'allumage de < 30 % en poids,
- une teneur en carbone à liaison organique de < 18 % en poids,
- une teneur en Cl < 1,5 % en poids,
- une teneur en Zn < 1,0 % en poids,
- une teneur en Cu < 0,2 % en poids,
- une teneur en Pb < 0,1 % en poids.
